# EUROPEAN PATENT APPLICATION

(11) **EP 4 593 160 A1**
(43) Date of publication of application: **30.07.2025**
(21) Application number: 24868783.2
(22) Date of filing: 19.09.2024
(51) Int. Cl.: H01M 10/6551, H01M 10/615, H01M 10/625

(54) **HEAT SINK ASSEMBLY**

(30) Priority: 21.09.2023 KR 20230126561
(71) Applicant: LG Energy Solution, Ltd., Seoul 07335 (KR)
(72) Inventor: HAN, Nyeon Gu, Daejeon 34122 (KR); KIM, Young Man, Daejeon 34122 (KR)
(74) Representative: Plasseraud IP
(86) International application number: PCT/KR2024/096159
(87) International publication number: WO 2025/063809

(57) **Abstract**

A heat sink assembly including a heat sink having a plurality of ribs extending along a longitudinal direction of the heat sink, a plurality of spaces located between the plurality ribs form a plurality of flow paths, an open first surface and an open second surface at opposite longitudinal ends of the heat sink, a first end plug including an inner end plug configured to close a portion of the first surface, the inner end plug includes a cut-out flow path formed along a width direction of the heat sink, the cut-out flow path having an open surface parallel with the first surface, and an outer end plug configured to close the open surface of the cut-out flow path and the remaining portion of the first surface not closed by the inner end plug, and a second end plug configured to close the second surface.

## Description

### [Technical Field]

The present disclosure relates to a heat sink assembly that forms, or is mounted to, a bottom surface of a battery pack having a plurality of secondary batteries to facilitate heat dissipation of the battery pack.

The application claims the benefit of priority from Korean Patent Application No. 10-2023-0126561, filed on September 21, 2023, the entire disclosure of which is incorporated herein by reference.

### [Background]

Secondary batteries, unlike primary batteries, are rechargeable and have been widely researched and developed in recent years due to their potential for miniaturization and high capacity. As the technology development and demand for mobile devices increases, the demand for secondary batteries as an energy source is increasing rapidly due to electric vehicles and energy storage systems that are emerging in response to current environmental protection needs.

Secondary batteries are categorized into coin-type batteries, cylindrical batteries, prismatic batteries, and pouch-type batteries based on the shape of the battery case. In a secondary battery, the electrode assembly mounted inside the battery case is a power generation element capable of charging and discharging comprising a stacked structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause further increase in temperature, resulting in a positive feedback chain reaction, eventually leading to a catastrophic state of thermal runaway.

In order to effectively dissipate the heat generated by secondary batteries, heat sinks (also called cooling plates) through which coolant flows are widely used. The heat sink is mounted on the bottom surface of a plurality of secondary batteries, for example, a battery pack mounting a plurality of secondary batteries, and performs a cooling function by absorbing heat generated inside the pack with a coolant and dissipating it to the outside.

Heat sinks can be divided into brazed heat sinks and extruded heat sinks according to their structure or manufacturing method. A brazed heat sink is a structure in which two plates are brazed and bonded to form a flow channel, which has a high degree of design freedom, but has a disadvantage in structural rigidity due to material degradation. On the other hand, an extruded heat sink, which is manufactured as a continuous body through extrusion molding, has an advantage in structural rigidity, but it has the disadvantage that only straight flow channels can be implemented, resulting in a large number of ports, and pipes taking up space for connections.

### [Summary]

### [Technical Problem]

The present disclosure is directed to provide a heat sink assembly that does not require a separate pipe for forming the flow paths, thus occupying less space, and that can improve pressure drop by reducing the number of components with a simplified flow path configuration.

In addition, the present disclosure has another object to provide a heat sink assembly capable of evenly distributing the flow rate of coolant flowing through the inlet flow path and the outlet flow path, respectively, and capable of simplifying outside pipes by reducing the number of components while allowing the inlet ports and outlet ports to be densely arranged.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a heat sink assembly, in one example, including a heat sink having a plurality of integrally molded ribs extending along a longitudinal direction of the heat sink, a plurality of spaces located between the plurality of ribs, the plurality of spaces forming a plurality of flow paths, an open first surface at a first longitudinal end of the heat sink, and an open second surface at a second longitudinal end of the heat sink, a first end plug configured to close the first surface, the first end plug including an inner end plug configured to close a portion of the first surface, the inner end plug including a cut-out flow path formed along a width direction of the heat sink, the cut-out flow path having an open surface parallel with the first surface, and an outer end plug configured to close the open surface of the cut-out flow path of the inner end plug and the remaining portion of the first surface not closed by the inner end plug, and second end plug configured to close the second surface.

The cut-out flow path of the inner end plug communicates with flow paths on remaining portion of the first surface not closed by the inner end plug.

The plurality of flow paths include at least one inlet flow path located where the first surface is closed by the inner end plug, and at least one outlet flow path where the first surface is closed by the outer end plug.

A return flow path is located in the second end plug, the return flow path forming a transition from the at least one inlet flow path to the at least one outlet flow path along the second surface.

An inlet port may be located on the heat sink where the first surface is closed by the inner end plug, and an outlet port may be located on the cut-out flow path of the inner end plug.

**In** one embodiment of the present disclosure, the heat sink may include a center heat sink body having a first side and a second side, a first inlet heat sink body bonded to the first side of the center heat sink body, a second inlet heat sink body bonded to the second side of the center heat sink body, a first outlet heat sink body bonded to the first inlet heat sink body; and a second outlet heat sink body bonded to the second inlet heat sink body.

Accordingly, each of the center heat sink body, the first inlet heat sink body, the second inlet heat sink body, the first outlet heat sink body and the second outlet heat sink body has open first and second surfaces at first and second ends in the longitudinal direction, the inner end plug is coupled to the first surface of the center heat sink body, the first inlet heat sink body and the second inlet heat sink body and the cut-out flow path is exposed at a first open end of the inner end plug and a second open end of the inner end plug.

The first and second open ends of the inner end plug may be aligned in parallel with respect to the first surface of the outlet heat sink body.

Further, each of the center heat sink body, the first inlet heat sink body and the second inlet heat sink body may include at least one inlet flow path.

**In** addition, the number of the at least one inlet flow path provided in the center heat sink body, the first inlet heat sink body and the second inlet heat sink body may correspond to the number of outlet flow paths provided in the first outlet heat sink body and the second outlet heat sink body.

For example, based on a center of the center heat sink body, the number of inlet flow paths and the number of outlet flow paths located on any one side of the center heat sink body may be the same.

Moreover, an inlet port may be located at the center of the center heat sink body.

### [Advantageous Effects]

The heat sink assembly of the present disclosure having the above configuration enables the cooling flow paths divided into inlet and outlet to be easily configured by performing machining processing on both ends in a longitudinal direction of the flow paths integrally formed in the heat sink, with the end plugs closing the open surfaces.

**In** addition, the heat sink assembly of the present disclosure is capable of securing excellent structural rigidity by manufacturing the heat sink as a continuous body through extrusion molding.

**In** addition, the heat sink assembly of the present disclosure can process the inner end plug to form a cut-out flow path for the outlet flow path, thereby enabling two outlet flow paths separately arranged on both sides to be merged into one, thereby enabling the outlet port to be configured as one. **In** addition, by locating the outlet port on the inner end plug, it enables the outlet port to be proximate to the inlet port, thereby simplifying the external pipe.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a heat sink assembly according to one embodiment of the present disclosure.
FIG. 2 is an exploded perspective view of the heat sink assembly of FIG. 1.
FIG. 3 is a drawing illustrating a flow path structure of the heat sink assembly.
FIG. 4 is a drawing illustrating an inner end plug and an outer end plug.
FIG. 5 is a drawing illustrating a heat sink assembly according to another embodiment of the present disclosure.
FIG. 6 is an exploded perspective view of the heat sink assembly of FIG. 5.
FIG. 7 is an enlarged view of the "A" portion of FIG. 5.

### [Detailed Description]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. **In** contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a heat sink assembly, in one example, including a heat sink having a plurality of ribs integrally molded along a longitudinal direction of the heat sink and in the heat sink, the spaces between the ribs forming a flow path, and having open first and second surfaces at both ends of the longitudinal direction, and first and second end plugs closing the first and second surfaces at both ends of the heat sink, respectively, wherein the first end plug includes an inner end plug, closing a portion of the first surface, and including an cut-out flow path formed along a width direction of the heat sink; and an outer end plug, closing together the cut-out flow path of the inner end plug and the remaining first surface on both sides not closed by the inner end plug.

The heat sink assembly of the present disclosure having the above configuration enables the cooling flow paths divided into inlet and outlet to be easily configured by performing machining processing on both ends in a longitudinal direction of the flow paths integrally formed in the heat sink, with the end plugs closing the open surfaces.

In addition, the heat sink assembly of the present disclosure is capable of securing excellent structural rigidity by manufacturing the heat sink as a continuous body through extrusion molding.

In addition, the heat sink assembly of the present disclosure can process the inner end plug to form a cut-out flow path for the outlet flow path, thereby enabling two outlet flow paths separately arranged on both sides to be merged into one, thereby enabling the outlet port to be configured as one. In addition, by locating the outlet port on the inner end plug, it enables the outlet port to be proximate to the inlet port, thereby simplifying the external pipe.

Hereinafter, specific embodiments of a heat sink assembly 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [First Embodiment]

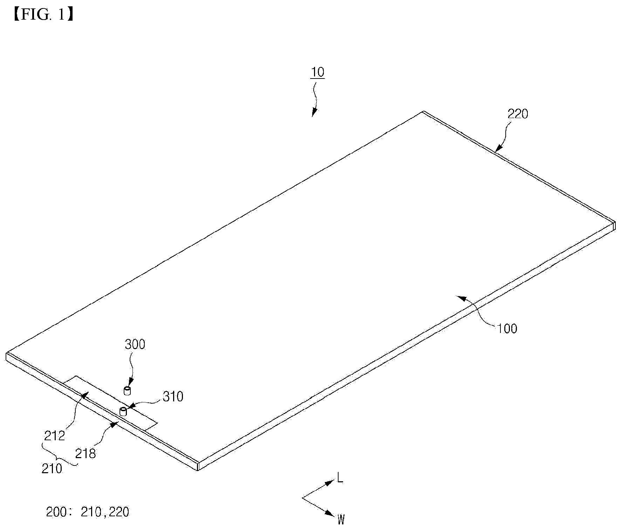

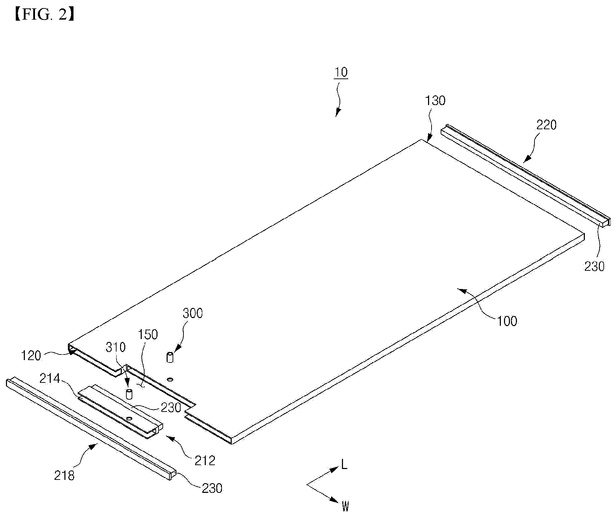

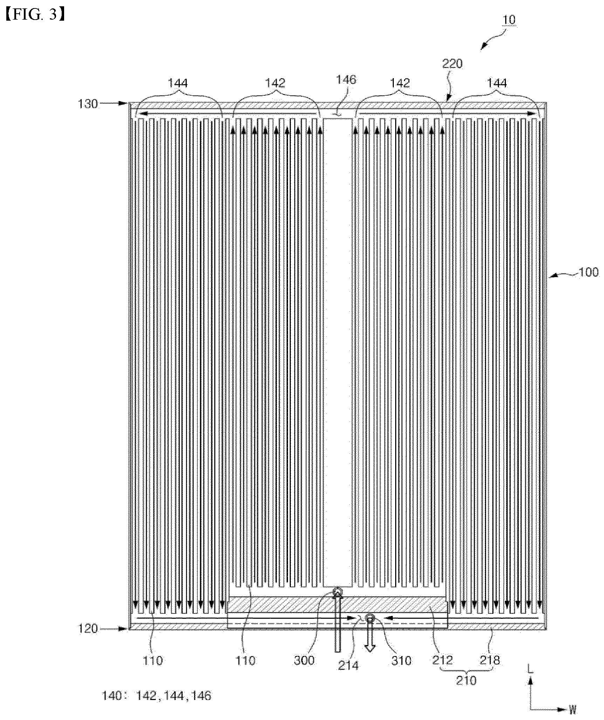

FIG. 1 is a drawing illustrating a heat sink assembly according to one embodiment of the present disclosure, FIG. 2 is an exploded perspective view of the heat sink assembly of FIG. 1, and FIG. 3 is a drawing illustrating a flow path structure of the heat sink assembly.

The heat sink assembly 10 of the present disclosure includes a heat sink 100 having a pair of open surfaces facing each other, and a pair of end plugs 200, in other words, first and second end plugs 210, 220. The open surfaces of the heat sink 100 are surfaces located on both sides in the longitudinal direction L, and for ease of description, the two open surfaces will be referred to as the first surface 120 and the second surface 130, respectively. Here, the longitudinal direction L is defined as referring to a direction in which the plurality of flow paths 140, which are hollow parts, are extended, and the width direction W is defined as referring to a direction orthogonal to the longitudinal direction L on a plane in which the plurality of flow paths 140 are disposed spaced apart.

The plurality of flow paths 140 in which the coolant flows are cavities formed along the longitudinal direction L, and the flow paths 140 are separated by ribs 110 between the flow paths 140. The first surface 120 and the second surface 130 at both ends in the longitudinal direction L of the heat sink 100 are opened. The heat sink 100 may be manufactured as an extrusion-molded product in which the plurality of flow paths 140 are integral molded along the longitudinal direction L through extrusion molding. The heat sink 100 manufactured by extrusion molding is shown herein as an exemplary embodiment.

The first and second end plugs 210, 220, respectively, serve to close the open first surface 120 and second surface 130 at both ends of the heat sink 100 and also to organically connect a plurality of flow paths 140 separated from each other in the interior of the heat sink 100 to form a flow in and out path of coolant. The flow in and out path of coolant formed by the first and second end plugs 210, 220 will be described in detail with reference to FIGS. 3 to 7.

Here, the embodiment shown is an example of a heat sink 100 having a structure that is open at both ends in the longitudinal direction L because of the characteristics of an extrusion-molded product. However, even in the case of a heat sink 100 that is not manufactured by extrusion molding, it would be possible to configure the heat sink assembly 10 of the present disclosure in the same manner of coupling the first and second end plugs 210, 220 to the open surfaces at both ends in the longitudinal direction L with a plurality of flow paths 140 extending from them.

FIG. 3 specifically illustrates flow paths 140 inside the heat sink assembly 10. The plurality of flow paths 140 extending in a longitudinal direction L between the first surface 120 and the second surface 130, their ends are spaced apart from the first surface 120 and the second surface 130 by a predetermined distance. The separation distance of the flow paths 140 from the first surface 120 and the second surface 130 can be freely designed by machining that mechanically removes the ribs 110 that divide the flow paths 140, which are hollow parts. By the machining of removing a portion of the ends of the ribs 110, a space (depth) is provided in which the end plugs 200 are inserted.

The first and second end plugs 210, 220, respectively, close the first surface 120 and the second surface 130 that are open at both ends of the heat sink 100. The end plugs 200 have an insertion part 230 of a thickness and width appropriate for coupling to the first surface 120 and second surface 130 of the heat sink 100. The end plugs 200 inserted into the heat sink 100 may be sealed and bonded by welding, for example, friction stir welding. For example, if the welding depths of the friction stir welding performed on the upper and lower surfaces of the heat sink 100 are such that they overlap each other, welding surfaces are formed in all directions (upward, downward, leftward, and rightward) of the end plug 200, thereby completing the sealing of the heat sink 100 by the end plug 200.

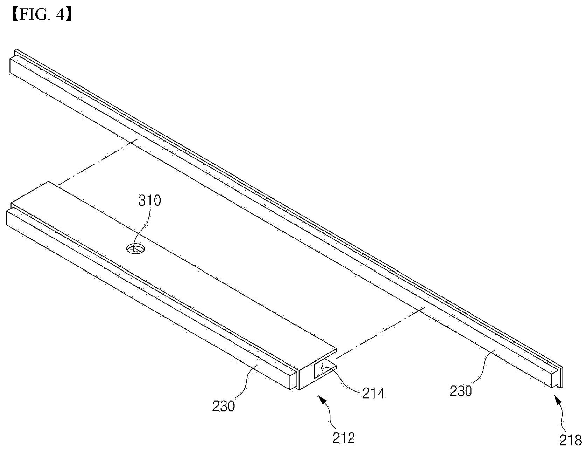

The first end plug 210, which seals the first surface 120 of the heat sink 100, comprises an inner end plug 212 and an outer end plug 218. The inner end plug 212 and the outer end plug 218 are shown in FIG. 4, and the coupling structure of the inner end plug 212 and the outer end plug 218 is shown in FIGS. 2 and 3.

The inner end plug 212 closes a part of the first surface 120. In the illustrated embodiment, the inner end plug 212 is coupled to a central area of the first surface 120. The inner end plug 212 includes a cut-out flow path 214 formed along the width direction W at the open end of the inner end plug 212, which is opposite to the insertion part 230 closing the first surface 120.

The heat sink 100 is formed with a slot 150 that defines a position in which the inner end plug 212 is inserted. The width of the slot 150 corresponds to the width of the inner end plug 212, and the open end of the inner end plug 212 faces outward. Accordingly, the cut-out flow path 214 formed in the inner end plug 212 is exposed facing outside. In addition, the cut-out flow path 214 is aligned in parallel with respect to the remaining first surface 120 that is not closed by the inner end plug 212. Accordingly, the cut-out flow path 214 of the inner end plug 212, and the remaining first surface 120 not closed by the inner end plug 212, are closed together by the outer end plug 218.

Referring to FIG. 3, the depth of the cut-out flow path 214 formed in the inner end plug 212 is longer than the length in the longitudinal direction L of the insertion part 230 of the outer end plug 218. Thus, by mutual coupling of the inner end plug 212 and the outer end plug 218, a sealed cut-out flow path 214 penetrating in the width direction W is formed in the inner end plug 212, and a space for coolant to flow is formed between the outer end plug 218 and the first surface 120 of the heat sink 100. Accordingly, the cut-out flow path 214 of the inner end plug 212 communicates with the flow paths on both sides where the first surface 120 is not closed by the inner end plug 212.

According to such flow path structure of the heat sink assembly 10, the flow path where the first surface 120 is closed by the inner end plug 212 forms the inlet flow path 142, and the flow path where the first surface 120 is closed by the outer end plug 218 forms the outlet flow path 144. In addition, the second end plug 220, which closes the second surface 130, forms a return flow path 146 transitioning from the inlet flow path 142 to the outlet flow path 144 along the second surface 130. In other words, the coolant flowing through the inlet flow path 142 flows through the return flow path 146 on the second surface 130 to the outlet flow path 144 on both sides, and flows outside from the terminal of the outlet flow path 144 of the first surface 120.

In particular, in the heat sink assembly 10 of the present disclosure, the outlet flow paths 144 on both sides are communicated with by the cut-out flow path 214 of the inner end plug 212. In other words, the coolant flowing through the outlet flow paths 144 on both sides merge into one at the cut-out flow path 214 of the inner end plug 212. Therefore, the heat sink assembly 10 of the present disclosure is sufficiently equipped with only one outlet port 310, which is an outlet for discharging the coolant to the outside, at an appropriate point on the first surface 120, even though the outlet flow paths 144 on both sides of the inlet flow path 142 are separated.

Since the plurality of flow paths 140 extend in the longitudinal direction L, and the first and second end plugs 210, 220 seal the first surface 120 and the second surface 130, the ports through which the coolant flows in and out of the heat sink assembly 10 can be configured to make the coolant flow across the overall heat transfer area of the heat sink assembly 10 by appropriately positioning the inlet and outlet ports 300, 310. To be considered herein, it is advantageous to have fewer number of inlet and outlet ports 300, 310 through which coolant flows in and out, and to dispose the inlet port 300 and outlet port 310 in close proximity, in order to simplify external pipes.

The heat sink assembly 10 of the present disclosure can have the inlet port 300 disposed on the heat sink 100 having the first surface 120 closed by the inner end plug 212, and the outlet port 310 disposed on the cut-out flow path 214 of the inner end plug 212. In particular, it is possible to have only one inlet port 300 and one outlet port 310 for one heat sink assembly 10. In addition, it is possible to have both the inlet port 300 and the outlet port 310 densely arranged around the inner end plug 212, as shown in FIGS. 1 to 3.

As such, the heat sink assembly 10 of the present disclosure can form a cut-out flow path 214 in the inner end plug 212 that closes a portion of the first surface 120 to form the inlet flow path 142, thereby enabling the two outlet flow paths 144 separately arranged on both sides of the inlet flow path 142 to merge into one, thereby enabling the outlet port 310 to be configured as one. In addition, by locating the outlet port 310 on the inner end plug 212, it can be proximate to the inlet port 300, thereby simplifying the external pipe.

### [Second Embodiment]

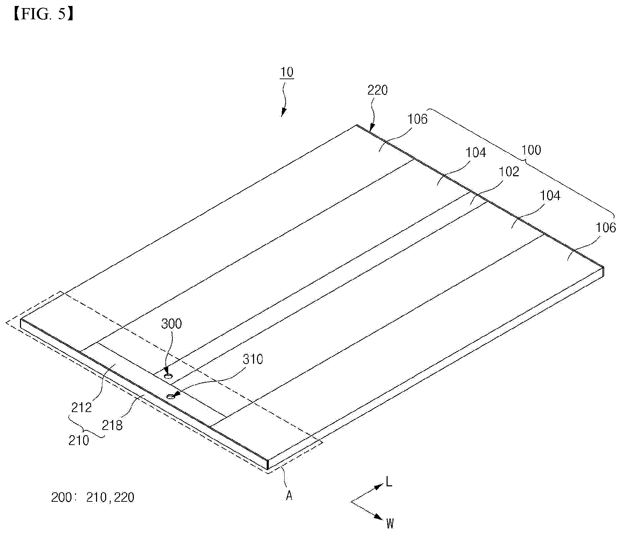

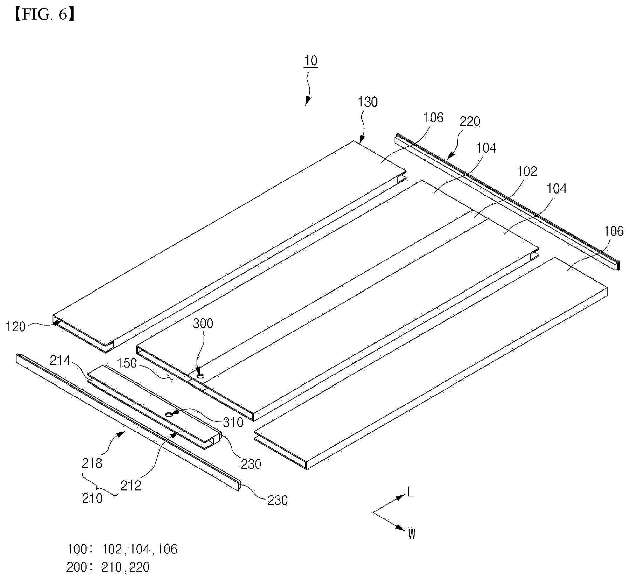

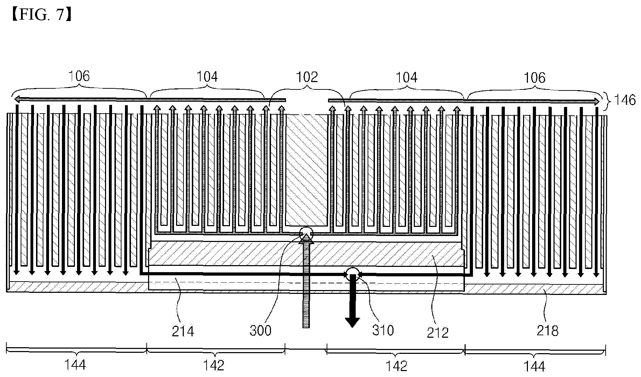

FIG. 5 is a drawing illustrating a heat sink assembly according to a second embodiment of the present disclosure, FIG. 6 is an exploded perspective view of the heat sink assembly of FIG. 5, and FIG. 7 is an enlarged view of the "A" portion of FIG. 5.

The heat sink assembly 10 of the illustrated second embodiment has the same basic flow path configuration as the first embodiment described above. However, the second embodiment considers the manufacturing convenience, expandability, and ease of design modification of the heat sink 100.

The heat sink assembly 10 described in the first embodiment is directed to an integral heat sink 100. **In** other words, the first embodiment relates to an embodiment in which the heat sink 100, for example, is manufactured as a single extrusion-molded product and processed to form internal flow paths by coupling first and second end plugs 210, 220. **In** contrast, the second embodiment relates to an embodiment in which a plurality of heat sink units 102, 104, 106 are bonded together to form a single heat sink 100.

As shown in FIGS. 5 and 6, the heat sink 100 has a structure in which a plurality of heat sink units 102, 104, 106 are bonded together. **In** the illustrated embodiment, the heat sink 100 comprises a center heat sink unit 102, an inlet heat sink unit 104 bonded to both sides of the center heat sink unit 102, and an outlet heat sink unit 106 bonded to both sides of the inlet heat sink unit 104.

Since a plurality of the heat sink units 102, 104, 106 are bonded along the width direction W to form one heat sink 100, the heat sink 100 can be variously configured by combining the number and/or specifications (e.g., different specifications such as width or length) of the heat sink units 102, 104, 106. In other words, the heat sink 100 can be easily manufactured by processing and handling the heat sink as a unit, and it is also easy for design modification and has excellent expandability in terms of area.

In the second embodiment of the heat sink assembly 10, an inner end plug 212 is coupled with respect to the first surface 120 of the center heat sink unit 102 and the inlet heat sink unit 104, and a cut-out flow path 214 is exposed at the open end (opposite to the coupling end) of the inner end plug 212. In addition, compared to the center heat sink unit 102 and the inlet heat sink unit 104, the length of the outlet heat sink unit 106 is longer by about the length of the inner end plug 212. Accordingly, the open ends of the inner end plug 212 may be aligned in parallel with respect to the first surface 120 of the outlet heat sink unit 106. Thus, in the second embodiment, it is not necessary to separately process a slot 150 for coupling the inner end plug 212 to a single heat sink.

As shown in FIG. 7, which is an enlarged view of portion "A" of FIG. 5, the inlet heat sink unit 104, as well as the center heat sink unit 102, may be provided with an inlet flow path 142. The center heat sink unit 102, which may form a solid structure capable of fixing various structures of the pack case built over the heat sink assembly 10, such as a center beam (not shown), may further comprise inlet flow paths 142 proximate to side surfaces of the center heat sink unit 102. In FIG. 7, an inlet flow path 142 is formed on both sides of the center heat sink unit 102, one on each side.

Here, the number of inlet flow paths 142 provided in the center heat sink unit 102 and the inlet heat sink unit 104 may correspond to the number of outlet flow paths 144 provided in the outlet heat sink unit 106. For example, based on the center of the center heat sink unit 102, as shown in the embodiment of FIG. 7, the number of inlet flow paths 142 and the number of outlet flow paths 144 disposed on any one side of the center heat sink unit 102 may be the same. In such a manner, the inlet flow paths 142 and outlet flow paths 144 may be evenly and symmetrically disposed, thereby inducing uniform and rapid heat dissipation from the overall heat dissipation area of the heat sink assembly 10.

Further, an inlet port 300 may be disposed at the center of the center heat sink unit 102. By the inlet port 300 located at a symmetrical center of the disposed flow paths, the flow rate of coolant flowing into the inlet flow paths 142 separated on both sides can be made equalized, and accordingly, the heat sink assembly 10 can exhibit uniform cooling performance that is not concentrated in a particular area.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: heat sink assembly
100: heat sink
102: center heat sink unit
104: inlet heat sink unit
106: outlet heat sink unit
110: rib
120: first surface
130: second surface
140: flow path
142: inlet flow path
144: outlet flow path
146: return flow path
150: slot
200: end plug
210: first end plug
212: inner end plug
214: cut-out flow path
218: outer end plug
220: second end plug
230: insertion part
300: inlet port
310: outlet port
L: longitudinal direction
W: width direction

## Claims

1. A heat sink assembly, comprising:
a heat sink including:
a plurality of integrally molded ribs extending along a longitudinal direction of the heat sink;
a plurality of spaces located between the plurality ribs, the plurality of spaces forming a plurality of flow paths;
an open first surface at a first longitudinal end of the heat sink; and
an open second surface at a second longitudinal end of the heat sink;
a first end plug configured to close the first surface, the first end plug including:
an inner end plug configured to close a portion of the first surface, the inner end plug comprising a cut-out flow path formed along a width direction of the heat sink, the cut-out flow path having an open surface parallel with the first surface; and
an outer end plug configured to close the open surface of the cut-out flow path of the inner end plug and the remaining portion of the first surface not closed by the inner end plug; and
a second end plug configured to close the second
surface.

2. The heat sink assembly of claim 1, wherein the cut-out flow path of the inner end plug communicates with flow paths located on the remaining portion of the first surface not closed by the inner end plug.

3. The heat sink assembly of claim 1, wherein the plurality of flow paths comprise:
at least one inlet flow path located where the first surface is closed by the inner end plug; and
at least one outlet flow path located where the first surface is closed by the outer end plug.

4. The heat sink assembly of claim 3, further comprising:
a return flow path located in the second end plug, the return flow path forming a transition from the at least one inlet flow path to the at least one outlet flow path along the second surface.

5. The heat sink assembly of claim 2, further comprising:
an inlet port located on the heat sink where the first surface is closed by the inner end plug; and
an outlet port located on the cut-out flow path of the inner end plug.

6. The heat sink assembly of claim 2, wherein the heat sink further comprises:
a center heat sink body having a first side and a second side;
a first inlet heat sink body bonded to the first side of the center heat sink body;
a second inlet heat sink body bonded to the second side of the center heat sink body;
a first outlet heat sink body bonded to the first inlet heat sink body; and
a second outlet heat sink body bonded to the second inlet heat sink body.

7. The heat sink assembly of claim 6, wherein each of the center heat sink body, the first inlet heat sink body, the second inlet heat sink body, the first outlet heat sink body and the second outlet heat sink body has open first and second surfaces at first and second ends in the longitudinal direction, the inner end plug being coupled to the first surface of the center heat sink body, the first inlet heat sink body and the second inlet heat sink bpdy. and
the cut-out flow path is exposed at a first open end of the inner end plug and a second open end of the inner end plug.

8. The heat sink assembly of claim 7, wherein the first and second open ends of the inner end plug are aligned in parallel with respect to the first surface of the outlet heat sink body.

9. The heat sink assembly of claim 6, wherein each of the center heat sink body, the first inlet heat sink body and the second inlet heat sink body comprise at least one inlet flow path.

10. The heat sink assembly of claim 9, wherein the number of the at least one inlet flow path provided in the center heat sink body, the first inlet heat sink body and the second inlet heat sink body correspond to the number of outlet flow paths provided in the first outlet heat sink body and the second outlet heat sink body.

11. The heat sink assembly of claim 10, wherein based on a center of the center heat sink body, the number of inlet flow paths and the number of outlet flow paths located on any one side of the center heat sink body are the same.

12. The heat sink assembly of claim 11, further comprising:
an inlet port is located at the center of the center heat sink body.
